# EUROPEAN PATENT APPLICATION

(11) **EP 3 905 228 A1**
(43) Date of publication of application: **03.11.2021**
(21) Application number: 21156497.6
(22) Date of filing: 11.02.2021
(51) Int. Cl.: G09F 21/04, G01C 1/00

(54) **HUB IMAGING ANGLE MONITORING APPARATUS**

(30) Priority: 28.04.2020 CN 202010348063
(71) Applicant: Citic Dicastal Co., Ltd., 066011 Quinhuangdao, Heibei (CN)
(72) Inventor: XU, Shiwen, Qinhuangdao, Heibei 066011 (CN); LI, Minglei, Qinhuangdao, Heibei 066011 (CN); DAI, Yao, Qinhuangdao, Heibei 066011 (CN); WANG, Shaoqian, Qinhuangdao, Heibei 066011 (CN); LIU, Weidong, Qinhuangdao, Heibei 066011 (CN); LI, Xi, Qinhuangdao, Heibei 066011 (CN)
(74) Representative: Gong, Jinping

(57) **Abstract**

The present invention discloses a hub imaging angle monitoring apparatus, comprising an X-axis accelerometer, a Y-axis accelerometer, a Z-axis gyroscope, a micro-processing unit and a power supply unit arranged on a hub, wherein the power supply unit supplies power to the X-axis accelerometer, the Y-axis accelerometer, the Z-axis gyroscope and the micro-processing unit, respectively; and the micro-processing unit can drive the X-axis accelerometer, the Y-axis accelerometer, and the Z-axis gyroscope to monitor movement data of the hub, and fuse the movement data to determine the imaging angle of the hub, thereby ensuring the stability of a hub imaging screen.

## Description

### Field of the Invention

The present invention relates to the field of vehicles, and specifically to a hub imaging angle monitoring apparatus.

### Background of the Invention

At present, during the process of hub rotation imaging, only the influence of rotation speed of a hub on the imaging is considered, without taking account of the influence of vibration and attitude change of the hub during the driving process of a vehicle on the hub imaging, resulting in the problems of unstable hub imaging, jumping pictures, and the like.

### Summary of the Invention

In view of this, the present invention aims to provide a hub imaging angle monitoring apparatus, which can monitor the spatial angle of a hub during movement and use this as a reference point to determine the imaging angle of the hub, thereby ensuring the stability of a hub imaging screen.

In order to achieve the above objective, the technical solution of the present invention is implemented as follows:
A hub imaging angle monitoring apparatus, comprising an X-axis accelerometer, a Y-axis accelerometer, a Z-axis gyroscope, a micro-processing unit and a power supply unit arranged on a hub, wherein the power supply unit supplies power to the X-axis accelerometer, the Y-axis accelerometer, the Z-axis gyroscope and the micro-processing unit, respectively; and the micro-processing unit can drive the X-axis accelerometer, the Y-axis accelerometer, and the Z-axis gyroscope to monitor movement data of the hub, and fuse the movement data to determine the imaging angle of the hub.

In some embodiments, the micro-processing unit can fuse the movement data to obtain an attitude angle of the hub, and a hub imaging system can use the attitude angle as a reference point to determine the imaging angle of the hub.

In some embodiments, the micro-processing unit fuses the movement data to filter out the influence of vibration on the hub and obtain the attitude angle of the hub.

In some embodiments, the fusion of the movement data by the micro-processing unit comprises simplified quaternion algorithm plus equalization filtering.

In some embodiments, the fusion of the movement data by the micro-processing unit comprises Kalman filtering.

In some embodiments, the power supply unit comprises a battery.

In some embodiments, the power supply unit comprises a self-energized power generation apparatus.

In some embodiments, the power supply unit comprises a solar power generator apparatus.

Compared with the prior art, the hub imaging angle monitoring apparatus according to the present invention has the following advantages:
By means of combined application of an X-axis accelerometer, a Y-axis accelerometer and a Z-axis gyroscope and fusion of data by a micro-processing unit, the hub imaging angle monitoring apparatus according to the present invention can detect the rotation speed of the hub without relying on external references, can calculate the current attitude of the hub according to the monitoring data, and can monitor the spatial angle of the hub during movement and use this as a reference point to determine the imaging angle of the hub, thereby overcoming image jitter or transient direction changes in image display due to driving bumps, and ensuring the stability of a hub imaging screen.

### Brief Description of the Drawing

The accompanying drawing constituting a part of the present invention is used for providing a further understanding of the present invention, and the schematic embodiments of the present invention and the descriptions thereof are used for interpreting the present invention, rather than constituting improper limitations to the present invention. In the drawing:

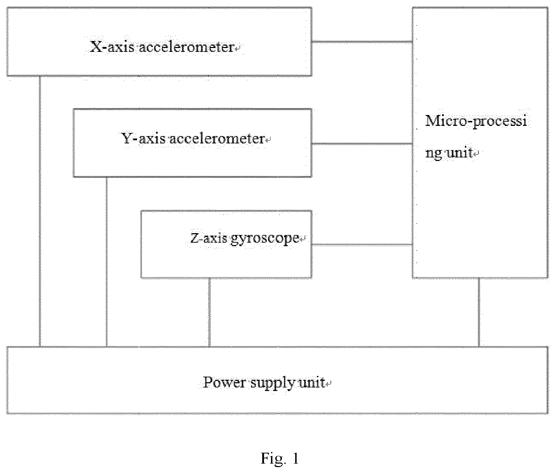

Fig. 1 is a schematic diagram of a hub imaging angle monitoring apparatus according to the present invention.

### Detailed Description of Embodiments

It should be noted that the embodiments in the present invention and the features in the embodiments can be combined with each other without conflicts.

Now the technical solutions of the present invention will be described clearly and completely with reference to the accompanying drawing and in combination with the embodiments. Apparently, the described embodiments are part of, not all of, the embodiments of the present invention. Based on the embodiments of the present invention, all other embodiments obtained by those of ordinary skill in the art without any creative effort shall fall within the protection scope of the present invention.

A hub imaging angle monitoring apparatus according to an embodiment of the present invention will be described will be described below with reference to Fig. 1 and in conjunction with the embodiments.

A hub imaging angle monitoring apparatus comprises an X-axis accelerometer, a Y-axis accelerometer, a Z-axis gyroscope, a micro-processing unit and a power supply unit arranged on a hub, wherein the power supply unit supplies power to the X-axis accelerometer, the Y-axis accelerometer, the Z-axis gyroscope and the micro-processing unit, respectively; the X-axis accelerometer, the Y-axis accelerometer and the Z-axis gyroscope can measure movement information of the hub; the micro-processing unit can drive the X-axis accelerometer, the Y-axis accelerometer and the Z-axis gyroscope to monitor movement data of the hub, and the micro-processing unit performs fusion processing on the movement data, such as simplified quaternion algorithm plus equalization filtering or Kalman filtering (Kalman filtering is a data processing technology that removes noise and restores real data, and can estimate the state of a dynamic system from a series of data with measurement noise when a measurement variance is known). After the fusion processing of the movement data by the micro-processing unit, the influence of vibration on the hub can be filtered out, the attitude angle of the hub can be obtained, and the hub imaging system can use the attitude angle as a reference point to determine the imaging angle of the hub and then to determine the direction of a rotating display screen.

In some embodiments, the power supply unit comprises a battery, such as a storage battery.

In some embodiments, the power supply unit comprises a self-energized power generation apparatus, such as a self-energized power generation apparatus disclosed in the invention published as No. CN110943575A and entitled "Power Supply System Mounted on Rotating Obj ect".

In some embodiments, the power supply unit comprises a solar power generator, such as a solar panel.

Compared with the prior art, the hub imaging angle monitoring apparatus according to the present invention has the following advantages:
By means of combined application of an X-axis accelerometer, a Y-axis accelerometer and a Z-axis gyroscope and fusion of data by a micro-processing unit, the hub imaging angle monitoring apparatus according to the present invention can detect the rotation speed of the hub without relying on external references , can calculate the current attitude of the hub according to the monitoring data, and can monitor the spatial angle of the hub during movement and use this as a reference point to determine the imaging angle of the hub, thereby overcoming image jitter or transient direction changes in image display due to driving bumps, and ensuring the stability of a hub image screen.

In the description of the present invention, it should be understood that the terms "center", "longitudinal", "transverse", "front", "rear", "left", "right", "vertical", "horizontal", "top", "bottom", "inner", "outer", and the like indicate orientations or positional relationships based on the drawings. The terms are only for description convenience of the present invention and simplification of the description, but do not indicate or imply that the pointed apparatuses or elements must have specific orientations or be constructed and operated in specific orientations. Therefore, the terms should not be understood to limit the present invention.

Furthermore, the terms "first" and "second" are only for the aim of description, and cannot be understood as indicating or implying the relative importance or implicitly indicating the quantity of the indicated technical features. Thus, the features defined with "first" and "second" may explicitly or implicitly comprise one or more of these features. In the description of the present invention, "a plurality of' means at least two, e.g., two, three, etc., unless otherwise specified.

In the present invention, unless otherwise specified and defined, the terms "mounted", "joined", "connected", "fixed" and the like should be understood in a broad sense, for example, being fixedly connected, detachably connected, integrated; mechanically connected, electrically connected, mutually communicated; directly connected, indirectly connected by a medium, communication of interiors of two components or interaction of two components. A person of ordinary skill in the art could understand the specific meanings of the above terms in the present invention according to specific circumstances.
The foregoing descriptions are merely preferred embodiments of the present invention, but are not intended to limit the present invention. Any modification, equivalent substitution, improvement and the like made within the spirit and principle of the present invention shall fall within the protection scope of the present invention.

## Claims

1. A hub imaging angle monitoring apparatus, comprising an X-axis accelerometer, a Y-axis accelerometer, a Z-axis gyroscope, a micro-processing unit and a power supply unit arranged on a hub, wherein:
the power supply unit supplies power to the X-axis accelerometer, the Y-axis accelerometer, the Z-axis gyroscope and the micro-processing unit, respectively; and
the micro-processing unit can drive the X-axis accelerometer, the Y-axis accelerometer, and the Z-axis gyroscope to monitor movement data of the hub, and fuse the movement data to determine the imaging angle of the hub.

2. The hub imaging angle monitoring apparatus according to claim 1, **characterized in that** the micro-processing unit can fuse the movement data to obtain an attitude angle of the hub, and a hub imaging system can use the attitude angle as a reference point to determine the imaging angle of the hub.

3. The hub imaging angle monitoring apparatus according to claim 2, **characterized in that** the micro-processing unit fuses the movement data to filter out the influence of vibration on the hub and obtain the attitude angle of the hub.

4. The hub imaging angle monitoring apparatus according to claim 3, **characterized in that** the fusion of the movement data by the micro-processing unit comprises simplified quaternion algorithm plus equalization filtering.

5. The hub imaging angle monitoring apparatus according to claim 3, **characterized in that** the fusion of the movement data by the micro-processing unit comprises Kalman filtering.

6. The hub imaging angle monitoring apparatus according to claim 1, **characterized in that** the power supply unit comprises a battery.

7. The hub imaging angle monitoring apparatus of claim 1, **characterized in that** the power supply unit comprises a self-energized power generation apparatus.

8. The hub imaging angle monitoring apparatus according to claim 1, self-energized power generation apparatus the power supply unit comprises a solar power generator apparatus.
